# EUROPÄISCHE PATENTSCHRIFT

(11) **EP 1 281 568 B1**
(45) Veröffentlichungstag und Bekanntmachung des Hinweises auf die Patenterteilung: **26.04.2006**
(21) Anmeldenummer: 01125209.5
(22) Anmeldetag: 24.10.2001
(51) Int. Cl.: B60P 1/44, F16B 21/10

(54) **Ladebordwandsystem zur Befestigung an Fahrzeugen**
Lift platform for attaching on a vehicle
Fixation d'un hayon élévateur sur un véhicule

(30) Priorität: 01.08.2001 EP 01118517
(43) Veröffentlichungstag der Anmeldung: 05.02.2003
(73) Patentinhaber: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole

(56) Entgegenhaltungen:
- EP-A- 0 567 720
- EP-A- 0 808 747
- DE-A- 19 603 612

## Beschreibung

Die Erfindung betrifft ein Ladebordwandsystem zur Befestigung an Fahrzeugen, insbesondere Lastkraftfahrzeugen, umfassend wenigstens ein mittels eines Hubaktuators betätigbares, wenigstens einen Tragarm aufweisendes Hubtragwerk und ggf. ein mittels eines Klappaktuators betätigbares, wenigstens einen Tragarm aufweisendes Klapptragwerk sowie eine im wesentlichen plattenförmige Ladebordwand zum Heben und Absenken einer Last und ggf. zum Verschwenken von der Horizontalen in die Vertikale und umgekehrt, wobei das Hubtragwerk und ggf. das Klapptragwerk um ein eine Drehachse bildendes Achselement drehbar am Fahrzeug befestigt sind.

Ein solches Ladebordwandsystem ist beispielsweise aus der gattungsgemäßen EP-A-0 808 747 bekannt. Ladebordwandsysteme dieser Art finden insbesondere Anwendung bei Lastkraftfahrzeugen, um mit dem Lastkraftfahrzeug zu transportierende Lasten am Einsatzort von der Ladeplattform des Lastkraftfahrzeugs auf die Fahrbahn, auf dem das Lastkraftfahrzeug steht, absenken zu können, so daß die Last dann anderweitig zum Bestimmungsort verbracht werden kann. Das Gleiche gilt für den Beladungsvorgang eines Lastkraftfahrzeugs, d.h. die Last wird auf die sich auf der Fahrbahnebene befindliche Ladebordwand aufgebracht, die Ladebordwand wird auf die Höhe der Ladeplattform des Lastkraftfahrzeugs angehoben und nachfolgend auf die Ladeplattform verbracht. Ist der Entlade- bzw. Beladevorgang beendet, kann bei einer Ausgestaltung der Ladebordwand diese aus der Horizontalen, in der sie sich zum Be-und Entladen befand, in die Vertikale verschwenkt werden, so daß die Ladebordwand als rückwärtiger Abschluß der Ladefläche bzw. eines kofferartig ausgebildeten Laderaums dienen kann. Bei einer anderen Ausgestaltung des Ladebordwandsystems, bei der die Ladebordwand faltbar ist (Faltladebordwand), kann nach Abschluß des Belade- und Entladevorganges die gefaltete Ladebordwand unter das hintere Ende der Ladeebene des Lastkraftfahrzeugs verschoben werden. Derartigen Ladebordwandsystemen fehlt vielfach ein gesonderter Klappaktuator.

Für das Heben und Senken der Ladebordwand in im wesentlichen horizontaler Ausrichtung für den Be- und Entladevorgang von der Ebene der Ladefläche eines Lastkraftfahrzeugs auf den Fahrbahnuntergrund und vom Fahrbahnuntergrund auf die Ebene der Ladefläche wird ein sogenannter Hubaktuator verwendet, der hydraulisch und/oder pneumatisch und/oder elektrisch betrieben werden kann. Für das Verschwenken der Ladebordwand wird, wenn das Ladebordwandsystem dafür ausgebildet ist, für das Öffnen und Schließen des eigentlichen Laderaums aus der Horizontalen in die Vertikale und umgekehrt, wird eine hydraulisch und/oder pneumatisch und/oder elektrisch betriebene Klappaktuatoreinrichtung verwendet. Ladebordwandsysteme der vorbeschriebenen bekannten Art weisen somit zwei Aktuatoreinrichtungen auf, wobei beispielsweise die Hubaktuatoreinrichtung mit einem Tragwerk des Hub- und Klapptragwerks zusammenwirkt, wohingegen beispielsweise die Klappaktuatoreinrichtung mit dem anderen Tragwerk des Hub- und Klapptragwerks zusammenwirkt.

Es sind aber auch Ladebordwandsysteme bekannt, die bei entsprechend ausgebildeten Tragwerken, die auch vielfach im wesentlichen parallelogrammförmig ausgebildet sind, beispielsweise zwei Hubaktuatoren und beispielsweise zwei Klappaktuatoren aufweisen.

Allen diesen bekannten unterschiedlichen Ladebordwandsystemen ist gemeinsam, daß beim Be- und Entladevorgang die Kraft, die in Abhängigkeit des zu hebenden bzw. zu senkenden Transportguts erhebliche Größen annehmen kann, und die durch das Eigengewicht des Ladebordwandsystems auftretende Kraft auf die Drehachse bzw. die Drehachsen einwirkt, über die das Ladebordwandsystem in seiner Gesamtheit am Fahrzeug drehbar befestigt ist. Über die Drehachse bzw. die Drehachsen, die durch ein Achselement bzw. durch Achselemente gebildet werden, wird die Kraft in die Tragrahmen des Fahrzeugs eingeleitet, die regelmäßig einen wesentlichen Teil des Fahrzeugchassis bilden.

Der bzw. die das Hubtragwerk bzw. die Hubtragwerke bildenden Tragarm bzw. die Tragarme, was gleichermaßen für den bzw. die das Klapptragwerk bzw. die Klapptragwerke bildenden Tragarme gilt, weisen regelmäßig kreisrunde Achslöcher auf, in denen die Drehachse bzw. das Achselement aufgenommen wird, um die sich die Tragarme des Ladebordwandsystems sowohl des Hubtragwerks bzw. der Hubtragwerke, wenn vorhanden, als auch des Klapptragwerks bzw. die Klapptragwerke, falls vorhanden, relativ zum Fahrzeug bei der Ausführung der bestimmungsgemäßen Funktion des Ladebordwandsystems, siehe oben, drehen. Die die gattungsgemäßen Tragarme bildenden Maschinenbauelemente sind regelmäßig aus metallischem Werkstoff, beispielsweise Stahl, hergestellt, was gleichermaßen auch für das die Drehachse bildende Achselement gilt.

Es ist bekannt, daß Ladebordwandsysteme der hier beschriebenen Art einem äußerst rauhen Betrieb ausgesetzt sind, d.h. allen nur erdenklichen Witterungseinflüssen, wie Schnee, Regen, Salz, Streumittel und Streugranulat von den Straßen, Öl, Kraftstoffen und Kraftstoffdämpfen und sogar Erdreich und streufähigem Ladegut, das bei undichter Ladeplattform auf das Ladebordwandsystem rieseln kann. Diese nicht zu verhindernde Beeinflussung des Ladebordwandsystems führt dazu, daß die vorbeschriebene Lagerung des Achselements in den lochartigen Achssitzen der Tragarme Korrosionsbeeinflussungen oder sonstigen nachteiligen Beeinflussungen unterliegt mit der Folge, daß im Falle einer Reparatur, eines Auswechselns oder einer Wartung des Ladebordwandsystems die Achselemente nach langem Gebrauch des Ladebordwandsystems nur mit der sprichwörtlichen rohen Gewalt aus ihren Achslöchern herausgeschlagen werden können. Das führt regelmäßig dazu, daß die Tragarme verbogen und die Öffnungen der Tragarme, in denen die Achselemente aufgenommen werden, ebenfalls beschädigt werden, mit der Folge, daß die Tragarme auf aufwendige Weise gerichtet werden müssen, was vielfach gar nicht möglich ist, und die lochartigen Achssitze zur Entfernung von Beschädigungen wie Riefen und dergleichen aufgerieben oder sogar neu gebohrt, ggf. sogar gebuchst werden müssen. Das hat dann zur Folge, daß ebenfalls das Achselement wegen des sich dann zwangsweise ergebenden größeren Durchmessers der Löcher der Achssitze in den Tragwerken erneuert werden muß und auch dementsprechend die fahrzeugseitige Aufnahme für das Achselement. Dieses alles ist mit erheblichem Aufwand an ggf. sogar neu einzusetzenden Teilen und mit erheblichem zeitlichen Aufwand verbunden, was neben den dabei auftretenden hohen Kosten äußerst nachteilig ist.

Aus der DE-A-196 03 612 ist eine Aufhängung für Längslenker an gefederten Achsaggregaten mit an der Unterseite eines Fahrzeugchassis angebrachten und bezüglich der Fahrtrichtung nach hinten offenen Federstützen bekannt, in denen jeweils ein Längslenker mittels eines Bolzens gelagert ist, welcher über eine rechteckförmige Kulissenscheibe mit einer bezüglich der vertikalen Ausdehnung der Kulissenscheibe schräg angeordneten Langlochführung in einer an der jeweiligen Außenlängsseite der Federstütze angeordneten, vertikal ausgerichteten Führung in und entgegen der Fahrtrichtung verschiebbar ausgebildet ist. Zur Einstellung des Spurlaufes einer Achse wird der Bolzen durch Verdrehen von Einstellmuttern und in dessen Folgen die gesamte Lagerung des Längslenkers in oder entgegen der Fahrtrichtung innerhalb des in den Längsseitenwänden der Federstütze angeordneten Langloches verschoben. Der Längslenker kommt somit innerhalb des Langloches an an sich beliebiger Position zum Stillstand und wird dort arretiert, wenn die Einstellung des Spurlaufes der Achse abgeschlossen ist.

Aus der EP-A-0 567 720 ist eine Steckbolzenverbindung für die Verbindung eines Maschinenbauteiles, bspw. des Anbaubockes eines landwirtschaftlichen Anbaugerätes, mit einem kraftübertragenden Bauelement, beispielsweise dem Oberlenker eines Dreipunktgestänges bei Ackerschleppern, bekannt. Das Maschinenteil weist eine Ausnehmung auf, die als Langloch ausgebildet ist. Der besagte Steckbolzen wird bei seiner Bewegung innerhalb des Langloches durch ein Halteteil, das ebenfalls ein Langloch aufweist, wie von einer Kulissenführung stets so orientiert, daß immer die gleichen Flächen einer Leibung in den Langlöchern an die gleichen Flächen auf einem Führungszapfen, der an dem Maschinenteil ortsfest angeordnet ist, anschlagen. Bei der hier beschriebenen Steckbolzenverbindung dienen die Langlöcher als Kulissenführungen von innerhalb der Langlöcher angeordneten Steckbolzen bzw. Führungszapfen.

Es ist deshalb Aufgabe der vorliegenden Erfindung ein Ladebordwandsystem mit einem Tragarm zu schaffen, der auf einfache Weise schnell von der Struktur, an der er befestigt ist, zu Reparaturzwecken, zu Wartungszwecken und zu Austauschzwecken entfernt werden kann, ohne daß dabei solche Maßnahmen wie bisher ergriffen werden müssen, bei denen der Tragarm beschädigt, ggf. zerstört oder sonstwie beeinträchtigt wird, und ohne daß die Löcher in dem Tragarm, in dem die Achselemente aufgenommen werden, beschädigt werden, und ohne daß das Achselement und die korrespondierende strukturseitige Aufnahme, beispielsweise ein Fahrzeug, des Achselements beeinträchtigt bzw. beschädigt wird, und daß die Demontage der Struktur, deren Teil der Tragarm ist, schnell vonstatten gehen kann und mittels die Struktur und den Tragarm nicht beschädigenden Werkzeugen.

Gelöst wird die Aufgabe gemäß der Erfindung dadurch, daß das die Drehachse bildende Achselement in einem Maschinenbauelement, das als Tragarm des Hubtragwerkes ausgebildet ist, in einem als Langloch ausgebildeten Achssitz aufgenommen wird.

Der Vorteil der erfindungsgemäßen Lösung liegt im wesentlichen darin, daß beim erfindungsgemäßen Tragarm, der das Maschinenbauelement bildet, beispielsweise im Zusammenwirken mit dem Ladebordwandsystem, der Effekt ausgenutzt wird, daß die durch das Ladebordwandsystem selbst ausgeübte und ggf. durch die auf der Ladeplattform befindliche Last die Tragarme so belastet werden, daß die Resultierende aller wirkenden Kräfte das Achselement an dem Ende des als Langloch ausgebildeten Achssitzen anliegen läßt, das der Ladebordwand abgewandt ist, unabhängig von der Länge der Ausdehnung des Langloches. Das gilt sowohl für den Zustand des Ladebordwandsystems im bestimmungsgemäßen Betrieb und in seinem Ruhezustand. Für die Demontage des Ladebordwandsystems vom Fahrzeug brauchen somit die Tragarme lediglich geringfügig in der dem Normalsitz des Achselements im Langloch entgegengesetzten Richtung verschoben zu werden, so daß das Achselement an das andere Ende oder in die Nähe des anderen Endes der Achslochbegrenzung verschoben wird, mit der Folge, daß das Achselement von den Tragarmen frei wird und von Hand aus den Öffnungen der Tragarme herausgezogen werden kann oder aber, geringfügig unterstützt durch Schläge mittels eines Gummi- oder Kunststoffhammers, aus seinem Sitz entfernt werden kann. Eine Beschädigung der Tragarme bzw. der Öffnungen der Tragarme und der Achselemente selbst ist dabei, wie angestrebt, ausgeschlossen und in kurzer Zeit ist eine Demontage möglich.

Insbesondere dann, wenn sowohl ein Hubtragwerk als auch ein Klapptragwerk am Ladebordwandsystem vorhanden sind, ist es vorteilhaft, daß auch das Achselement im Tragarm des Klapptragwerks in einem als Langloch ausgebildeten Achssitz aufgenommen wird. Sinngemäß gilt nämlich auch für das Klapptragwerk bzw. die vom Klapptragwerk umfaßten Tragarme mit in den Tragarmen ausgebildeten Löchern für die Achselemente das Gleiche wie das zu den das Hubtragwerk bildenden Tragarmen Gesagte. Das vorangehend Gesagte gilt im übrigen nicht nur für ein am Ladebordwandsystem ausgebildetes einziges Hubtragwerk bzw. ein einziges dort ausgebildetes Klapptragwerk, sondern auch dann, wenn beispielsweise zwei Hubtragwerke mit jeweiligen Tragarmen bzw. auch zwei Klapptragwerke mit jeweiligen Tragarmen beim Ladebordwandsystem ausgebildet sind.

Gemäß einer vorteilhaften Ausgestaltung des Ladebordwandsystems verläuft die Längsachse des Langlochs im wesentlichen längs der Tragarme, so daß vorteilhafterweise sichergestellt ist, daß im belasteten oder entlasteten Zustand der Ladebordwand das Achselement immer an dem der Ladebordwand abgewandten Ende des Langloches anliegt.

Der das Hubtragwerk bildende Tragarm kann gemäß einer weiteren vorteilhaften Ausgestaltung des Ladebordwandsystems derart ausgestaltet sein, daß das Hubtragwerk zwei voneinander beabstandete Tragarme umfaßt, wobei in beiden Tragarmen jeweils ein Langloch ausgebildet ist. Ein derart ausgebildeter Tragarm weist gegenüber einem einteilig ausgebildeten Tragarm ggf. eine größere Stabilität auf und die das Achselement bildenden Löcher bilden eine einfache und fortwährend stabile Aufnahme des Achselements. Es sind bei dieser Ausgestaltung somit keine Maßnahmen zu treffen, die das Achselement kippstabil gegenüber den Tragarmen halten, was allerdings ggf. erforderlich wäre, wenn das Hubtragwerk lediglich einen einzigen Tragarm aufweisen würde, was allerdings grundsätzlich möglich ist.

Ebenso wie beim Hubtragwerk kann vorteilhafterweise auch beim Klapptragwerk der Tragarm derart ausgestaltet sein, daß er zwei voneinander beabstandete Tragarme umfaßt, wobei ebenfalls in beiden Tragarmen ein Langloch ausgebildet ist. Auch im Zusammenhang mit den beiden Tragarmen des Klapptragwerks gilt das vorangehend zu den beiden das Hubtragwerk bildenden Tragarmen Gesagte in identischer Form.

Vorteilhafterweise sind die Enden des Langloches halbkreisförmig begrenzt, was aber nicht zwingend ist, da normalerweise das Achselement relativ zu den Tragarmen im eingesetzten Zustand feststeht, d.h. sich in den Löchern der Tragarme nicht dreht, denn die Drehung des Achselements findet normalerweise in den fahrzeugseitigen Aufnahmen für das Achselement statt. Es ist aber fertigungstechnisch einfacher zu realisieren, wenn sowohl die Enden des Langloches halbkreisförmige Begrenzungen aufweisen als auch das Achselement einen im wesentlichen kreisförmigen Querschnitt aufweist.

Die halbkreisförmigen Begrenzungen können zwar in bezug auf die Begrenzungsradien prinzipiell gleich groß sein, es ist vorteilhafterweise aber sinnvoll, die Radien der halbkreisförmigen Begrenzungen unterschiedlich groß auszubilden, um somit bei der Demontage des Maschinenbauelementes, wenn es bei Ladebordwandsystemen eingesetzt wird, die Tragarme derart in Fahrzeugrichtung längs des Langloches verschieben zu können, daß das Achselement den Bereich der größeren halbkreisförmigen Begrenzung erreicht und damit automatisch außer Kontakt mit den Begrenzungsrändern des Langloches kommt, so daß das Achselement in dieser Position leicht entfernbar ist.

Gemäß einer weiteren anderen vorteilhaften Ausgestaltung des Maschinenbauelements ist das Achselement mittels Befestigungsmitteln relativ zum Maschinenbauelement bzw. zum Tragarm des Hubtragwerks und, falls vorhanden, ggf. mittels Befestigungsmitteln relativ zum Tragarm des Klapptragwerks, lösbar befestigbar, wenn das Maschinenbauelement beispielsweise einem Tragarm bzw. Tragarmen von Ladebordwandsystemen entspricht. Befestigungsmittel dieser Art können beispielsweise dadurch gebildet werden, daß am Achselement ein Gewinde oder an beiden Enden ein Gewinde vorgesehen ist, das in entsprechend ausgebildete Gewinde im Tragarm eingreift. Auch Querlöcher im Achselement orthogonal zum Tragarm bzw. zu den Tragarmen sind möglich.

Vorzugsweise ist das Befestigungsmittel in Form eines Schraubbolzens ausgebildet, der in einer mit dem Maschinenbauelement bzw. dem Tragarm bzw. den Tragarmen verbundenen Gewindeführung, die beispielsweise am Maschinenbauelement bzw. Tragarm mittels Schweißung befestigt ist, geführt wird und in ein Querloch des Achselements eingreift. Eine derartige Ausgestaltung gestattet es, daß das Achselement als einfaches, stangenförmiges Drehteil gefertigt werden kann, das durch das Loch im Maschinenbauelement bzw. im Tragarm bzw. die Löcher in den Maschinenbauelementen bzw. den Tragarmen lediglich hindurchgesteckt zu werden braucht und quer dazu mittels eines standardmäßig bereitstellbaren Schraubbolzens arretiert werden kann und auf gleiche Weise sehr einfach entfernt werden kann, wenn die Struktur bzw. das Ladebordwandsystem demontiert werden soll.

Um auf einfache Weise sicherzustellen, daß der Schraubbolzen, der das Achselement in seinem bestimmungsgemäßen Sitz im Tragarm bzw. den Tragarmen halten soll, selbst wiederum sicher in seinem Sitz im Eingriff mit dem Querloch des Achselements gehalten wird, ist ein Arretierungsmittel für den Schraubbolzen vorgesehen.

Das Arretierungsmittel wird vorteilhafterweise durch eine mit einem Innengewinde versehene Buchse gebildet, wobei die Buchse zwischen Gewindeführung und dem Kopf des Schraubbolzens einklemmbar ist. Wenn sich der Schraubbolzen in seiner Endstellung in der Gewindeführung im Eingriff mit dem Querloch des Achselements befindet, übt die geeignet dafür dimensionierte Buchse als Sicherungs- bzw. Arretierungsmittel eine zwischen Gewindeführung und Schraubbolzen wirkende Klemmkraft aus, so daß der Schraubbolzen in seiner Endstellung im Querloch des Achselements gesichert verbleibt.

Um die Klemmkraft zwischen Schraubbolzen und Gewindeführung zur Gewährleistung eines fortwährend sicheren Sitzes des Schraubbolzens im Querloch des Achselements sicherzustellen bzw. diesen Sitz noch sicherer auszugestalten, ist die Buchse aus einem kaltverformbaren Werkstoff hergestellt, d.h. dann, wenn der Schraubbolzen in die Gewindeführung eingeschraubt wird, verformt sich die Buchse und übt durch die Verformung wiederum eine den Sitz des Schraubbolzens in der Gewindeführung zusätzlich sichernde Gegenkraft aus. Der kaltverformbare Werkstoff kann beispielsweise ein geringelastisches Metall wie Kupfer oder Bronze sein, es ist aber möglich, dafür einen geeignet geringelastischen Kunststoffwerkstoff vorzusehen. Der Werkstoff sollte auch inelastisch und ggf. weich sein.

Schließlich ist es vorteilhaft, daß die Gewindeführung im wesentlichen axial zu ihrem Innengewinde eine Vertiefung zur Aufnahme der Buchse aufweist, so daß diese sich bei ihrer Verformung im Zuge ihrer Stauchung beim Einschrauben des Gewindebolzens in die Gewindeführung an den Seitenwänden der Vertiefung in der Gewindeführung noch zusätzlich abstützen kann und durch die dabei wirkende Reibkraft zwischen Buchse und Vertiefung der Gewindeführung ein Verdrehen der Buchse zusätzlich noch verhindert wird, wodurch die Sicherung des Schraubbolzens im Querloch des Achselements nochmal vergrößert wird.

Die Erfindung wird nun unter Bezugnahme auf die nachfolgenden schematischen Zeichnungen anhand eines Ausführungsbeispieles im einzelnen beschrieben. Darin zeigen:
- Fig. 1: in perspektivischer Darstellung ein Ladebordwandsystem gemäß der Erfindung, das an horizontalen Stegen des Tragrahmens eines Fahrzeugs befestigt ist, wobei sich die Ladebordwand in abgesenktem Zustand befindet,
- Fig. 2: in perspektivischer Darstellung einen Teil des Hubtragwerks, gebildet aus zwei Tragarmen, die im wesentlichen parallel voneinander beabstandet sind,
- Fig. 3: den Endbereich eines Tragarmes im Ausschnitt in der Draufsicht und
- Fig. 4: in perspektivischer Darstellung den Endbereich eines Tragarms des Hub- oder Klapptragwerks, bestehend aus zwei Tragarmen, mit eingesetztem Achselement und mit das Achselement sicherndem Schraubbolzen in teilweise auseinandergezogener Darstellung.

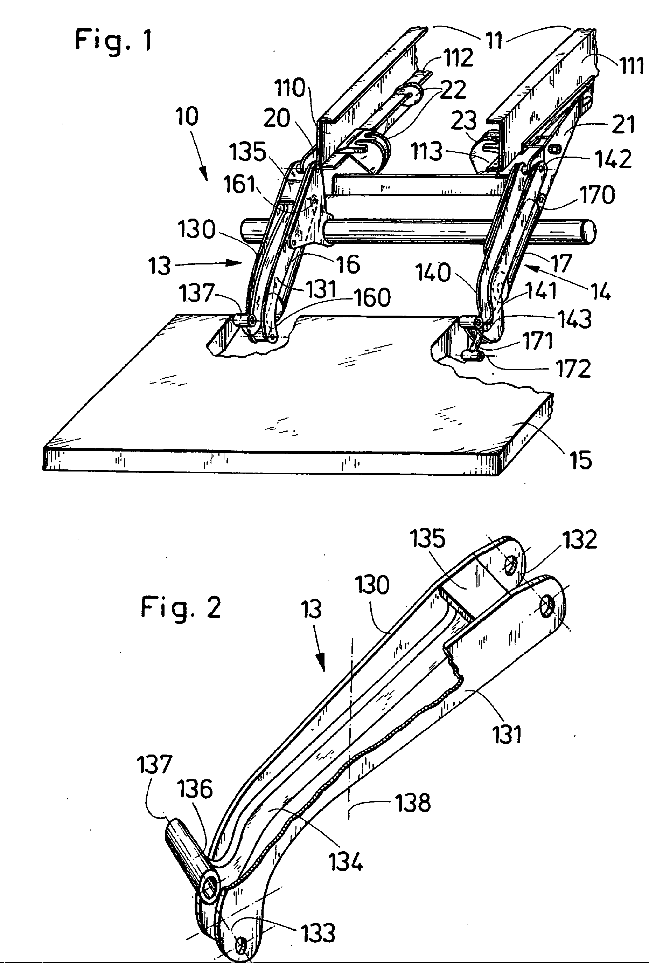

Es wird zunächst Bezug genommen auf das in Fig. 1 dargestellte Ladebordwandsystem 10, wie es in der eingangs erwähnten EP-A-0 808 747 beschrieben und dargestellt ist, und das beispielhaft zur Erklärung des Gegenstandes der Erfindung zunächst kurz erläutert wird. Soweit Einzelheiten aus der nachfolgenden Beschreibung bezüglich des Ladebordwandsystems 10 nicht ersichtlich sind, wird ausdrücklich auf die EP-A-0 808 747 Bezug genommen.

Das Ladebordwandsystem 10 umfaßt im wesentlichen ein Hubtragwerk 13 und ein Klapptragwerk 14, im folgenden erstes Tragwerk 13 und zweites Tragwerk 14 genannt, die im wesentlichen parallel voneinander beabstandet an einem Fahrzeug 11 Ober Befestigungselemente 20, 21 befestigt werden. Das erste und das zweite Tragwerk 13, 14 bilden zusammen mit den Befestigungselementen 20, 21, das zweite Tragwerk 14 zusätzlich noch zusammen mit einer Klappaktuatoreinrichtung 17, eine im wesentlichen parallelogrammförmige Struktur. Mit dem ersten und dem zweiten Tragwerk 13, 14 ist eine im wesentlichen plattenförmige Ladebordwand 15 zum Heben und Absenken einer Last (ohne Last dargestellt) und zum Verschließen des Stauraums des Fahrzeugs 11 drehbar verbunden. Mit dem ersten Tragwerk 13 wirkt eine Hubaktuatoreinrichtung 16 zum Heben und Senken der Ladebordwand 15 zusammen. Die Klappaktuatoreinrichtung 17, die zum Verschwenken der Ladebordwand 15 von der Horizontalen in die Vertikale und umgekehrt dient, wirkt mit dem zweiten Tragwerk 14 zusammen und ist Teil seiner parallelogrammförmigen Struktur.

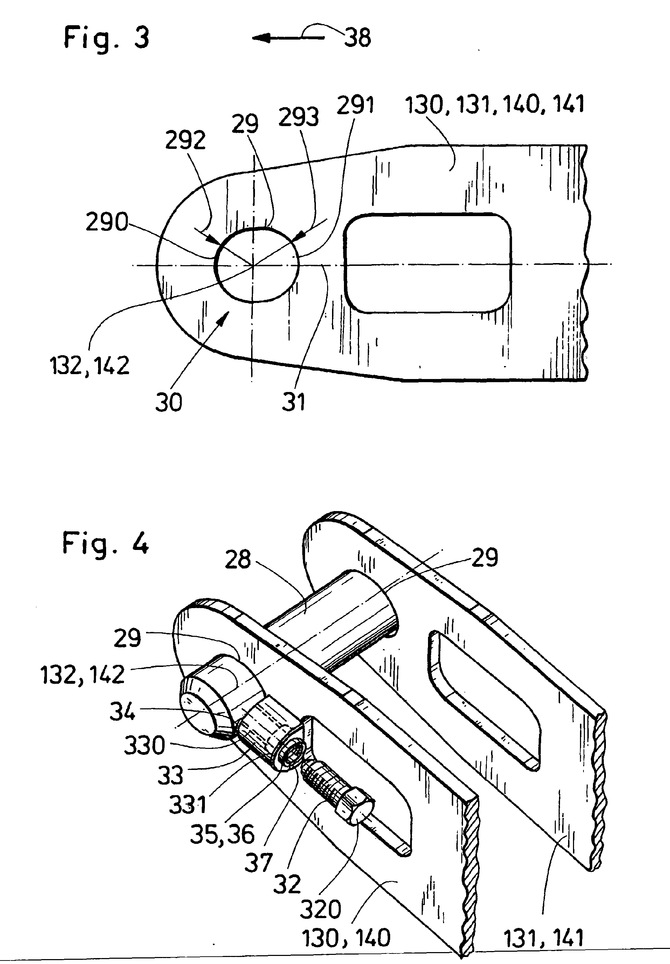

Das erste Tragwerk 13 (Hubtragwerk) in Fig. 2 und links dargestellt in Fig. 1, umfaßt zwei im wesentlichen parallel voneinander beabstandete Tragwerke 130, 131, die über eine Drehachse 132 am Befestigungselement 20 drehbar befestigt sind. Die Drehachse 132 wird durch ein Achselement 28 gebildet, vgl. Fig. 4, das zylinderförmig ausgebildet ist. Die am entgegengesetzten Ende der ersten Tragarme 130, 131 ausgebildete zweite Drehachse ist mit dem ersten Ende 160 der Hubaktuatoreinrichtung 16 befestigt. Das zweite Ende 161 der Hubaktuatoreinrichtung 16 ist ebenfalls drehbar am Befestigungselement 20 befestigt.

Im wesentlichen in der Mittelebene 138 zwischen den ersten Tragarmen 130, 131 ist ein zweiter Tragarm 134 vorgesehen, vgl. Fig. 2. Der zweite Tragarm 134 ist mit seinem ersten Ende 135 mit den beiden ersten Tragarmen 130, 131 derart befestigt, daß eine traversenartige Überbrückung beider erster Tragarme 130, 131 erreicht wird. Das zweite Ende 136 des zweiten Tragarmes 134 ist über eine im wesentlichen orthogonal zu den ersten beiden Tragarmen 130, 131 verlaufende Drehachse 137 drehbar mit der Ladebordwand 15 befestigt.

Das zweite Tragwerk 14 (Klapptragwerk), das ähnlich wie das erste Tragwerk 13 ausgebildet ist, weist wiederum zwei im wesentlichen parallel voneinander beabstandete erste Tragarme 140, 141 auf, die über eine erste Drehachse 142 am Befestigungselement 21 drehbar befestigt sind. Auch diese Drehachse 142 wird durch ein im wesentlichen zylinderförmig ausgebildetes Achselement 38 gebildet, genau wie beim oben beschriebenen ersten Tragwerk 13 (Hubtragwerk), vgl. ebenfalls Fig. 4. Die am anderen Ende der ersten Tragarme 140, 141 vorgesehene zweite Drehachse 143 ist im wesentlichen orthogonal zu den ersten Tragarmen 140, 141 ausgebildet und verläuft im wesentlichen parallel zur ersten Drehachse 142. Über die Drehachse 143 sind die beiden Tragarme 140, 141 drehbar an der Ladebordwand 15 befestigt.

Gewissermaßen als ein Schenkel des parallelogrammförmig ausgebildeten zweiten Tragwerks 14 ist die Klappaktuatoreinrichtung 17 vorgesehen, vgl. Fig. 1, die an ihrem einen Ende 170 um eine Drehachse 174 drehbar am Befestigungselement 21 befestigt ist. Mit ihrem zweiten Ende 171 ist die Klappaktuatoreinrichtung 17 um eine Drehachse 172, die im wesentlichen orthogonal zur Längsachse 173 der Klappaktuatoreinrichtung 17 ausgebildet ist, drehbar mit der Ladebordwand 15 befestigt.

Es wird dann Bezug genommen auf die Darstellung von Fig. 3, in der die der Ladeplattform 15 abgewandten Endbereiche der Tragarme 130, 131 bzw. 140, 141 dargestellt sind. Die Drehachse 132 des ersten Tragarmes 130, 131 bzw. die Drehachse 142 des zweiten Tragarmes 140, 141, ist bzw. sind Mittelpunkt des Achssitzes bzw. Achslagers 30. Dieser Achssitz bzw. das Achslager 30 ist als Langloch 29 ausgebildet, vgl. Fig. 3. Das der Ladebordwand 15 abgewandte Ende 290 des Langloches 29 weist einen Radius 292, das der Ladebordwand 15 zugewandte Ende 291 des Langloches 29 den Radius 293 auf. Der Radius 292 entspricht im wesentlichen dem Radius des Achselementes 28, wohingegen der Radius 293 größer als der Radius 292 ist.

Das Langloch 29 liegt mit seiner Längsachse auf einer im wesentlichen mittig durch die Tragarme 130, 131 bzw. 140, 141 verlaufenden Längsachse 31. An einem Tragarm 130, 131, wie in Fig. 4 dargestellt, oder an beiden Tragarmen 130, 131 bzw. 140, 141 ist eine Gewindeführung 33 bzw. sind Gewindeführungen 33 ausgebildet, die ein Innengewinde 330 aufweist bzw. aufweisen. Dieses Innengewinde 330 ist mit seiner Gewindeachse im wesentlichen parallel zur Ebene der ersten und zweiten Tragarme 130, 131 bzw. 140, 141 ausgerichtet. In der Gewindeführung 33 ist axial zur Achse des Innengewindes 330 eine Vertiefung 331 vorgesehen, die derart bemessen ist, daß darin ein in Form einer Buchse 36 ausgebildetes Arretierungsmittel 35 aufgenommen werden kann, das beispielsweise aus einem polymeren Kunststoff oder auch aus einem nichtelastischen, kaltverformbaren Werkstoff, beispielsweise Metall oder Kunststoff, besteht. Die Buchse 36 weist ein Innengewinde 37 auf, das entsprechend dem Gewinde des Schraubbolzens 32 ausgebildet ist. Die Gewindeführung 33 kann beispielsweise mittels einer Schweißverbindung an den Tragarmen 130, 131 bzw. 140, 141 befestigt werden.

Das Achselement 28 weist ein Querloch 34 auf, das im wesentlichen orthogonal zu einer durch das Achselement 28 hindurchgehenden Achse, die die gedachte Drehachse 132, 142 ist, ausgebildet ist.

Beim Einschrauben des Schraubbolzens 32 in das Innengewinde 330 der Gewindeführung 33 greift in der Endstellung des Schraubbolzens 32 die Spitze des Schraubbolzens 32 in das Querloch 34 des Achselementes 28 ein.

Bevor der Schraubbolzen 32 in das Innengewinde 330 eingeschraubt wird, wird die Buchse 36 über ihr Innengewinde 37 auf den Schraubbolzen 32 aufgeschraubt. Die Buchse 36 ist derart bemessen, daß sie sich beim Einschrauben in das Innengewinde 330 einerseits auf der Innenbegrenzung und am Bodenrand der Vertiefung 331 abstützt und andererseits am Kopf 320 des Schraubbolzens 32. Bevor der Schraubbolzen 32 seinen endgültigen Sitz im Querloch 34 erreicht hat, wird die Buchse 36 gestaucht, so daß sie einerseits über das Gewinde des Schraubbolzens 32 und andererseits über die Vertiefung 31 in der Gewindeführung 33 einen Preßsitz zwischen Gewindeführung 33 und dem Schraubbolzen 32 erzeugt, so daß in der Endstellung des Schraubbolzens 32 im Querloch 34 des Achselements 28 ein fester Sitz erzeugt wird, so daß das Achselement 28 relativ zu den Tragarmen 130, 140 bzw. 131, 141 festsitzt.

Zum Demontieren des Ladebordwandsystems 10 vom Fahrzeug 11 wird zunächst der Schraubbolzen 32 entfernt. Durch geringfügige Verschiebung des Ladebordwandsystems 10 in Richtung des Pfeils 38, vgl. Fig. 3, gelangt das Achselement 28 dann in Anlage an das Ende 291 des Langloches 29, das einen größeren Radius 293 als den des Radius des Achselementes 28 aufweist. Das Achselement 28 berührt dann das Langloch 29 lediglich am Ende 292 in einem theoretischen ifinitesimalen Punkt. Es kann dann das Achselement 28 unter Aufwendung geringer Kräfte entweder per Hand oder ggf. unter Zuhilfenahme eines Gummi- oder Kunststoffhammers beschädigungsfrei aus dem Achssitz 30 herausgezogen bzw. herausbewegt werden.

Die ersten und zweiten Tragarme 130, 131 und 140, 141 bilden beim erfindungsgemäßen Ladebordwandsystem 10 das erfindungsemäße Maschinenbauelement.

### Bezugszeichenliste

- 10: Ladebordwandsystem
- 11: Fahrzeug
- 110: Tragrahmen
- 111: Tragrahmen
- 112: horizontaler Steg
- 113: horizontaler Steg
- 13: erstes Tragwerk
- 130: erster Tragarm
- 131: erster Tragarm
- 132: erste Drehachse
- 133: zweite Drehachse
- 134: zweiter Tragarm
- 135: erstes Ende
- 136: zweites Ende
- 137: Drehachse
- 138: Mittelebene
- 14: zweites Tragwerk
- 140: erster Tragarm
- 141: erster Tragarm
- 142: erste Drehachse
- 143: zweite Drehachse
- 15: Ladebordwand
- 16: Hubzylindereinrichtung
- 160: erstes Ende
- 161: zweites Ende
- 162: Drehachse
- 17: Klappzylindereinrichtung
- 170: erstes Ende
- 171: zweites Ende
- 172: Drehachse
- 173: Längsachse
- 174: Drehachse
- 20: Befestigungselement
- 21: Befestigungselement
- 28: Achselement
- 29: Langloch
- 290: Ende
- 291: Ende
- 292: Radius
- 293: Radius
- 30: Achssitz/Achslager
- 31: Längsachse
- 32: Befestigungsmittel/ Schraubbolzen

- 320: Kopf des Schraubbolzens
- 33: Gewindeführung
- 330: Innengewinde
- 331: Vertiefung
- 34: Querloch
- 35: Arretierungsmittel
- 36: Buchse
- 37: Innengewinde/Buchse
- 38: Pfeil

## Patentansprüche

1. Ladebordwandsystem (10) zur Befestigung an Fahrzeugen (11), insbesondere Lastkraftfahrzeugen, umfassend wenigstens ein mittels eines Hubaktuators (16) betätigbares, wenigstens einen Tragarm (130; 131) aufweisendes Hubtragwerk (13) sowie eine im wesentlichen plattenförmige Ladebordwand (15) zum Heben und Absenken einer Last, wobei das Hubtragwerk (13) um ein eine Drehachse (132, 162) bildendes Achselement (28) drehbar am Fahrzeug (11) befestigt ist, **dadurch gekennzeichnet, daß** das die Drehachse (132) bildende Achselement (28) in einem Maschinenbauelement, das als Tragarm (130; 131) des Hubtragwerks (13) ausgebildet ist, in einem als Langloch (29) ausgebildeten Achssitz (30) aufgenommen wird.

2. Ladebordwandsystem nach Anspruch 1, **dadurch gekennzeichnet, daß** dieses ein mittels eines Klappaktuators (17) betätigbares, wenigstens einen Tragarm (140; 141) aufweisendes Klapptragwerk (14) zum Verschwenken der Ladebordwand (15) von der Horizontalen in die Vertikale und umgekehrt aufweist, wobei das Klapptragwerk (14) um ein eine Drehachse (142, 174) bildendes Achselement (28) drehbar am Fahrzeug (11) befestigt ist.

3. Ladebordwandsystem nach Anspruch 2, **dadurch gekennzeichnet, daß** die Drehachse (142, 174) im als Tragarm (140; 141) ausgebildeten Maschinenbauelement des Klapptragwerks (14) in einem als Langloch (29) ausgebildeten Achssitz (30) aufgenommen wird.

4. Ladebordwandsystem nach einem oder beiden der Ansprüche 2 oder 3, **dadurch gekennzeichnet, daß** die Längsachse (31) des Langlochs (29) im wesentlichen längs der Tragarme (130; 131, 140; 141) verläuft.

5. Ladebordwandsystem nach einem oder mehreren der Ansprüche 1 bis 4, **dadurch gekennzeichnet, daß** das Hubtragwerk (13) zwei voneinander beabstandete Tragarme (130, 131) umfaßt, wobei in beiden Tragarmen (130, 131) jeweils ein Langloch (29) ausgebildet ist.

6. Ladebordwandsystem nach einem oder mehreren der Ansprüche 2 bis 5, **dadurch gekennzeichnet, daß** das Klapptragwerk (14) zwei voneinander beabstandete Tragarme (140, 141) umfaßt, wobei in beiden Tragarmen (140, 141) ein Langloch (29) ausgebildet ist.

7. Ladebordwandsytem nach einem oder mehreren der Ansprüche 1 bis 6, **dadurch gekennzeichnet, daß** die Enden (290, 291) des Langloches (29) halbkreisförmig begrenzt sind.

8. Ladebordwandsystem nach einem oder mehreren der Ansprüche 1 bis 7, **dadurch gekennzeichnet, daß** die Radien (292, 293) der halbkreisförmigen Begrenzungen gleich groß sind.

9. Ladebordwandsystem nach Anspruch 8, **dadurch gekennzeichnet, daß** die Radien (292, 293) der halbkreisförmigen Begrenzungen unterschiedlich groß sind.

10. Ladebordwandsystem nach einem oder mehreren der Ansprüche 1 bis 9, **dadurch gekennzeichnet, daß** das Achselement (28) mittels Befestigungsmitteln (32) relativ zum Maschinenbauelement lösbar befestigbar ist.

11. Ladebordwandsystem nach Anspruch 10, **dadurch gekennzeichnet, daß** das Befestigungsmittel (32) ein Schraubbolzen ist, der in einer mit dem Tragarm (130; 131, 140; 141) verbundenen Gewindeführung (33) geführt in ein Querloch (34) des Achselementes (28) eingreift.

12. Ladebordwandsystem nach Anspruch 11 **dadurch gekennzeichnet, daß** der Schraubbolzen (32) mittels eines Arretierungsmittels (35) in seiner Ineingriffsstellung im Querloch (34) gesichert gehalten wird.

13. Ladebordwandsystem nach Anspruch 12, **dadurch gekennzeichnet, daß** das Arretierungsmittel (35) eine mit einem Innengewinde (37) versehene Buchse (36) ist, wobei die Buchse (36) zwischen Gewindeführung (33) und dem Kopf (320) des Schraubbolzens (32) einklemmbar ist.

14. Ladebordwandsystem nach Anspruch 13, **dadurch gekennzeichnet, daß** die Buchse (36) aus einem kaltverformbaren Werkstoff besteht.

15. Ladebordwandsystem nach Anspruch 14, **dadurch gekennzeichnet, daß** die Buchse (36) aus einem Kunststoffwerkstoff besteht.

16. Ladebordwandsystem nach einem oder mehreren der Ansprüche 13 bis 15, **dadurch gekennzeichnet, daß** die Gewindeführung (33) im wesentlichen axial zu ihrem Innengewinde (330) eine Vertiefung (331) zur Aufnahme der Buchse (36) aufweist.

## Claims

1. Loading tailgate system (10) for attaching to vehicles (11), in particular heavy goods vehicles, comprising at least one lifting frame (13) incorporating at least one support arm (130; 131) which can be operated by means of a lifting actuator (16), as well as an essentially board-shaped loading tailgate (15) for raising and lowering a load, which lifting frame (13) is affixed to the vehicle (11) so as to be pivotable about a shaft element (28) constituting a pivot axis (132, 162), **characterised in that** the shaft element (28) constituting the pivot axis (132) is accommodated in a mechanical component constituting a support arm (130; 131) of the lifting frame (13) in a shaft seat (30) provided in the form of an elongate hole (29).

2. Loading tailgate system as claimed in claim 1, **characterised in that** it has a folding frame (14) incorporating at least one support arm (140; 141) which can be operated by means of a folding actuator (17) for pivoting the loading tailgate (15) from a horizontal into a vertical position and vice versa, which folding frame (14) is affixed to the vehicle (11) so as to be pivotable about a shaft element (28) constituting a pivot axis (142, 174).

3. Loading tailgate system as claimed in claim 2, **characterised in that** the pivot axis (142, 174) is accommodated in the mechanical component of the folding frame (14) provided in the form of a support arm (140; 141) in a shaft seat (30) provided in the form of an elongate hole (29).

4. Loading tailgate system as claimed in one or both of claims 2 or 3, **characterised in that** the longitudinal axis (31) of the elongate hole (29) extends essentially along the support arms (130; 131, 140; 141).

5. Loading tailgate system as claimed in one or more of claims 1 to 4, **characterised in that** the lifting frame (13) comprises two mutually spaced support arms (130, 131) and an elongate hole (29) is provided in each of the two support arms (130, 131).

6. Loading tailgate system as claimed in one or more of claims 2 to 5, **characterised in that** the folding frame (14) comprises two mutually spaced support arms (140, 141) and an elongate hole (29) is provided in each of the two support arms (140, 141).

7. Loading tailgate system as claimed in one or more of claims 1 to 6, **characterised in that** the ends (290, 291) of the elongate hole (29) have a semi-circular boundary.

8. Loading tailgate system as claimed in one or more of claims 1 to 7, **characterised in that** the radii (292, 293) of the semi-circular boundaries are the same size.

9. Loading tailgate system as claimed in claim 8, **characterised in that** the radii (292, 293) of the semi-circular boundaries are of different sizes.

10. Loading tailgate system as claimed in one or more of claims 1 to 9, **characterised in that** the shaft element (28) can be releasably fixed relative to the mechanical component by fixing means (32).

11. Loading tailgate system as claimed in claim 10, **characterised in that** the fixing means (32) is a screw bolt, which is guided in a threaded guide (33) joined to the support arm (130; 131, 140; 141), engaging in a transverse hole (34) of the shaft element (28).

12. Loading tailgate system as claimed in claim 11, **characterised in that** the screw bolt (32) is held secure in its engaged position in the transverse hole (34) by a locking means (35).

13. Loading tailgate system as claimed in claim 12, **characterised in that** the locking means (35) is a bush (36) provided with an internal thread (37), which bush (36) can be clamped between the threaded guide (33) and the head (320) of the screw bolt (32).

14. Loading tailgate system as claimed in claim 13, **characterised in that** the bush (36) is made from a cold-deformable material.

15. Loading tailgate system as claimed in claim 14, **characterised in that** the bush (36) is made from a plastic material.

16. Loading tailgate system as claimed in one or more of claims 13 to 15, **characterised in that** the threaded guide (33) has a recess (331) disposed essentially axially with respect to its internal thread (330) for accommodating the bush (36).

## Revendications

1. Système de hayon élévateur (10) pour la fixation sur des véhicules (11), en particulier des véhicules utilitaires, comprenant au moins une structure de levage (13) comprenant au moins un bras de support (130 ; 131), pouvant être actionné au moyen d'un vérin de levage (16), ainsi qu'un hayon élévateur (15) essentiellement en forme de plateau pour l'élévation et l'abaissement d'une charge, la structure de levage (13) étant fixée de façon rotative sur le véhicule (11) autour d'un élément d'axe (28) formant un axe de rotation (132, 162), **caractérisé en ce que** l'élément d'axe (28) formant l'axe de rotation (132) dans un élément de construction mécanique qui est configuré comme un bras de support (130 ; 131) de la structure de levage (13) est logé dans un siège d'axe (30) configuré comme un trou oblong (29).

2. Système de hayon élévateur selon la revendication 1, **caractérisé en ce que** celui-ci comprend un ensemble porteur rabattable (14), comprenant au moins un bras de support (140 ; 141), pouvant être actionné au moyen d'un vérin rabattable (17) en vue du basculement du hayon élévateur (15) de la position horizontale à la position verticale et l'inverse, l'ensemble porteur rabattable (14) étant fixé de façon rotative sur le véhicule (11) autour d'un élément d'axe (28) formant un axe de rotation (142, 174).

3. Système de hayon élévateur selon la revendication 2, **caractérisé en ce que** l'axe de rotation (142, 174) dans l'élément de construction mécanique de l'ensemble porteur rabattable (14) est logé dans un siège d'axe (30) configuré comme un trou oblong (29).

4. Système de hayon élévateur selon une ou les deux revendications 2 ou 3, **caractérisé en ce que** l'axe longitudinal (31) du trou oblong (29) s'étend essentiellement le long des bras de supports (130 ; 131 ; 140 ; 141).

5. Système de hayon élévateur selon une ou plusieurs des revendications 1 à 4, **caractérisé en ce que** la structure de levage (13) comprend deux bras de support (130, 131) séparés l'un de l'autre, un trou oblong (29) étant configuré respectivement dans les deux bras de support (130, 131).

6. Système de hayon élévateur selon une ou plusieurs des revendications 2 à 5, **caractérisé en ce que** l'ensemble porteur rabattable (14) comprend deux bras de support (140, 141) séparés l'un de l'autre, un trou oblong (29) étant configuré respectivement dans les deux bras de support (140, 141).

7. Système de hayon élévateur selon une ou plusieurs des revendications 1 à 6, **caractérisé en ce que** les extrémités (290, 291) du trou oblong (29) sont délimitées en forme de demi-cercles.

8. Système de hayon élévateur selon une ou plusieurs des revendications 1 à 7, **caractérisé en ce que** les rayons (292, 293) des délimitations en forme de demi-cercles sont de même dimension.

9. Système de hayon élévateur selon la revendication 8, **caractérisé en ce que** les rayons (292, 293) des délimitations en forme de demi-cercles sont de taille différente.

10. Système de hayon élévateur selon une ou plusieurs des revendications 1 à 9, **caractérisé en ce que** l'élément d'axe (28) peut être fixé de façon détachable à l'aide de moyens de fixation (32) par rapport à l'élément de construction mécanique.

11. Système de hayon élévateur selon la revendication 10, **caractérisé en ce que** le moyen de fixation (32) est un boulon fileté qui s'engage dans un guidage fileté (33) relié au bras de support (130 ; 131 ; 140 ; 141) en étant dirigé dans un orifice transversal (34) de l'élément d'axe (28).

12. Système de hayon élévateur selon la revendication 11, **caractérisé en ce que** le boulon fileté (32) est maintenu fixe dans sa position d'engrènement dans l'orifice transversal (34) à l'aide d'un moyen de blocage (35).

13. Système de hayon élévateur selon la revendication 12, **caractérisé en ce que** le moyen de blocage (35) est une bague (36) dotée d'un filetage interne (37), la bague (36) pouvant être serrée entre le guidage fileté (33) et la tête (320) du boulon fileté (32).

14. Système de hayon élévateur selon la revendication 13, **caractérisé en ce que** la bague (36) est formée d'un matériau façonnable à froid.

15. Système de hayon élévateur selon la revendication 14, **caractérisé en ce que** la bague (36) est formée d'un matériau en plastique.

16. Système de hayon élévateur selon une ou plusieurs des revendications 13 à 15, **caractérisé en ce que** le guidage fileté (33) comprend, essentiellement axialement à son filetage interne (330), un creux (331) destiné au logement de la bague (36).
